(19) Europäisches Patentamt
European Patent Office
Office européen des brevets

(11) **EP 4 629 321 A1**

(12) **EUROPEAN PATENT APPLICATION**
published in accordance with Art. 153(4) EPC

(43) Date of publication:
**08.10.2025  Bulletin 2025/41**

(21) Application number: **23897435.6**

(22) Date of filing: **09.11.2023**

(51) International Patent Classification (IPC):
**H01M 4/134** (2010.01)      **H01M 4/40** (2006.01)
**H01M 10/052** (2010.01)

(52) Cooperative Patent Classification (CPC):
**H01M 4/134; H01M 4/40; H01M 10/052**

(86) International application number:
**PCT/JP2023/040420**

(87) International publication number:
**WO 2024/116783 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.11.2022  JP 2022190487**

(71) Applicant: **Panasonic Intellectual Property
Management Co., Ltd.
Kadoma-shi, Osaka 571-0057 (JP)**

(72) Inventors:
• **ISHII, Kiyohiro
  Kadoma-shi, Osaka 571-0057 (JP)**
• **KANO, Akira
  Kadoma-shi, Osaka 571-0057 (JP)**
• **USCHIYAMA, Yohei
  Kadoma-shi, Osaka 571-0057 (JP)**

(74) Representative: **Novagraaf International SA
Chemin de l'Echo 3
1213 Onex, Geneva (CH)**

(54) **LITHIUM SECONDARY BATTERY**

(57)    A lithium secondary battery (10) disclosed includes a positive electrode (11), a negative electrode (12), a separator (13), and a nonaqueous electrolyte. The negative electrode (12) includes a current collector and a lithium alloy layer formed on the current collector. The lithium alloy layer contains magnesium. The negative electrode (12) is a negative electrode in which a metal layer containing lithium and magnesium is formed on the lithium alloy layer through deposition of lithium metal during charging, and the lithium metal dissolves during discharging. When the state of charge is 80% or more, a ratio $R_{AM}/R_{AL}$ of the number of moles $R_{AM}$ of magnesium to the number of moles $R_{AL}$ of lithium in the lithium alloy layer is greater than a ratio $R_{MM}/R_{ML}$ of the number of moles $R_{MM}$ of magnesium to the number of moles $R_{ML}$ of lithium in the metal layer.

*FIG. 1*

**Description**

[Technical Field]

The present disclosure relates to a lithium secondary battery.

[Background Art]

Lithium secondary batteries (also referred to as lithium metal secondary batteries), in which lithium metal is used as a negative electrode active material, have high theoretical capacity densities. In a lithium secondary battery, lithium is deposited on a negative electrode current collector during a charging process, and the deposited lithium dissolves in a nonaqueous electrolyte during a discharging process. In a lithium secondary battery, a negative electrode containing a lithium alloy is used in some cases. Conventionally, various proposals have been made regarding a negative electrode of a lithium secondary battery.

Claim 1 of Patent Literature 1 (International Publication No. 2022/138490) describes a "lithium secondary battery comprising: a positive electrode; a negative electrode; a separator disposed between the positive electrode and the negative electrode; and a nonaqueous electrolyte, in which the negative electrode contains a lithium alloy containing magnesium at least in a charge state, lithium metal is deposited on the negative electrode during charging, the lithium metal dissolves during discharging, and the nonaqueous electrolyte contains hydrofluoroether and lithium ions".

Claim 1 of Patent Literature 2 (Japanese Laid-Open Patent Publication No. H05-050815) describes a "high density anode that can be charged at least 20 times while good performance is maintained, and that contains a high-density metal foil alloyed with an alkali metal and having a thickness of 5 to 100 $\mu$".

[Citation List]

[Patent Literature]

PTL 1: International Publication No. 2022/138490
PTL 2: Japanese Laid-Open Patent Publication No. H05-050815

[Summary of Invention]

[Technical Problem]

There is demand for lithium secondary batteries having improved cycle characteristics, and it is important to suppress the expansion of the negative electrode in order to improve cycle characteristics. An object of the present disclosure is to provide a lithium secondary battery having a favorable cycle characteristic.

[Solution to Problem]

One aspect of the present disclosure relates to a lithium secondary battery. The lithium secondary battery is a lithium secondary battery including: a positive electrode; a negative electrode; a separator disposed between the positive electrode and the negative electrode; and a nonaqueous electrolyte, in which the negative electrode includes a current collector and a lithium alloy layer formed on the current collector, the lithium alloy layer contains magnesium, the negative electrode is a negative electrode in which a metal layer containing lithium and magnesium is formed on the lithium alloy layer through deposition of lithium metal during charging, and the lithium metal dissolves during discharging, and when the state of charge is 80% or more, a ratio $R_{AM}/R_{AL}$ of the number of moles $R_{AM}$ of magnesium to the number of moles $R_{AL}$ of lithium in the lithium alloy layer is greater than a ratio $R_{MM}/R_{ML}$ of the number of moles $R_{MM}$ of magnesium to the number of moles $R_{ML}$ of lithium in the metal layer.

[Advantageous Effects of Invention]

According to the present disclosure, it is possible to obtain a lithium secondary battery having a favorable cycle characteristic.

While novel features of the present invention are set forth particularly in the appended claims, the present invention, both as to organization and content, will be better understood and appreciated, along with other objects and features thereof, from the following detailed description taken in conjunction with the drawings.

[Brief Description of Drawings]

[FIG. 1] FIG. 1 depicts a cross-sectional view schematically showing a lithium secondary battery of Embodiment 1.
[FIG. 2] FIG. 2 depicts a graph showing one example of evaluation results in examples.
[FIG. 3] FIG. 3 depicts a graph showing another example of evaluation results in examples.
[FIG. 4] FIG. 4 depicts images showing one example of a process for manufacturing a negative electrode.
[FIG. 5] FIG. 5 depicts images showing one example of a process subsequent to the manufacturing process shown in FIG. 4.
[FIG. 6] FIG. 6 depicts images showing one example of a state of a negative electrode.
[FIG. 7] FIG. 7 depicts an image obtained by binarizing a portion of the image shown in FIG. 6.

[Description of Embodiments]

Although embodiments according to the present disclosure will be described below using examples, the present disclosure is not limited to the examples described below. Although specific numerical values and materials may be mentioned as examples in the following description, other numerical values and other materials may be applied as long as effects of the present disclosure can be obtained. The term "range of numerical value A to numerical value B" used in this specification includes the numerical value A and the numerical value B, and can be read as "range of numerical value A or more to numerical value B or less". In the following description, when lower limits and upper limits of numerical values regarding specific physical properties, conditions, or the like are given as examples, any of the above-mentioned lower limits and any of the above-mentioned upper limits can be combined as desired, as long as the lower limit is not greater than or equal to the upper limit. In the following description, when examples of constituent elements or methods are listed, unless otherwise specified, only one of the listed examples may be used, or two or more of the listed examples may be used in combination.

(Lithium Secondary Battery)

Hereinafter, the lithium secondary battery according to this embodiment may be referred to as "lithium secondary battery (B)". The lithium secondary battery (B) includes a positive electrode, a negative electrode, a separator disposed between the positive electrode and the negative electrode, and a nonaqueous electrolyte. The negative electrode includes a current collector (negative electrode current collector) and a lithium alloy layer formed on the current collector. The lithium alloy layer contains magnesium. The negative electrode is a negative electrode in which a metal layer containing lithium and magnesium is formed on the lithium alloy layer through deposition of lithium metal during charging, and lithium metal dissolves during discharging. When the State Of Charge (SOC) is 80% or more, a ratio $R_{AM}/R_{AL}$ of the number of moles $R_{AM}$ of magnesium to the number of moles $R_{AL}$ of lithium in the lithium alloy layer is greater than a ratio $R_{MM}/R_{ML}$ of the number of moles $R_{MM}$ of magnesium to the number of moles $R_{ML}$ of lithium in the metal layer.
In a typical lithium secondary battery, the lithium metal is deposited on a negative electrode during charging, and the deposited lithium metal dissolves during discharging. In general, in lithium secondary batteries, a film is formed on the negative electrode due to decomposition and/or reaction of components contained in the electrolyte. The film is called a SEI (Solid Electrolyte Interphase) film. The SEI film is also formed on the surface of deposited lithium metal. During charging, on the negative electrode, lithium metal is deposited and a SEI film is formed. Therefore, compared with lithium ion secondary batteries, a charging reaction of lithium secondary batteries is more likely to be ununiform, which may result in a decrease in capacity and deterioration in cycle characteristics. Also, when the charging reaction locally occurs due to the SEI film, the lithium metal is deposited in the form of dendrites, which makes the negative electrode more likely to expand. If the negative electrode expands, the electrolyte solution contained in the positive electrode and the separator will be pushed out, reducing the lithium ion concentration and deteriorating cycle characteristics. In addition, if lithium metal is deposited in the form of dendrites, the specific surface area of the lithium metal will increase, which in turn increases a side reaction between the lithium metal and the electrolyte, resulting in significant deterioration in cycle characteristics.
On the other hand, in the lithium secondary battery (B) according to this embodiment, the negative electrode has the above configuration. As a result of studies, the inventors of the present application have found that by using the negative electrode having the above configuration, it is possible to reduce expansion of the negative electrode and improve cycle characteristics. The present disclosure is based on this new finding.
Since the negative electrode of the lithium secondary battery (B) according to this embodiment contains magnesium, which has a higher standard electrode potential than lithium, it is conceivable that the reductive decomposition reaction of the electrolyte solution is suppressed, and the growth of the SEI film is suppressed. Furthermore, the negative electrode of the lithium secondary battery (B) not only contains magnesium but also has an uneven distribution of magnesium. Therefore, as shown in the Examples, the expansion of the negative electrode can be particularly suppressed, and cycle characteristics can be significantly improved.

In this specification, a state of charge (SOC) of 80% refers to a state in which the battery is charged with an electrical quantity that is 80% of the rated capacity of the battery. When the SOC is 100%, it means that the battery is fully charged. A SOC of 100% may be defined as, for example, a state in which the current value is 0.02C or less when the battery is charged at a current value of 0.2C to the rated voltage and then charging is continued at the rated voltage. Here, 1C (A) is a current value determined by 1C (A) = rated capacity (Ah)/1 (h).

When the lithium metal is deposited to form a metal layer, magnesium in the lithium alloy layer diffuses into the metal layer. At least part of diffused magnesium may form an alloy with lithium in the metal layer.

The metal layer may contain high magnesium portions having a higher proportion of magnesium than the other portions of the metal layer. At least some of the high magnesium portions may be aggregated into particles to form a plurality of particulate portions. With this configuration, high effects may be obtained.

The plurality of particulate portions may have an average particle size of 5 $\mu$m or less. With this configuration, the specific surface area of aggregated magnesium can be increased, and the decomposition reaction of the electrolyte solution can be suppressed. The average particle size of the particulate portions can be measured using the following procedure. First, the negative electrode is taken out from the lithium secondary battery with a SOC of 80% or more. A cross section of a portion of the negative electrode taken out where the metal layer is deposited is analyzed through SEM-EDX (scanning electron microscope-energy dispersive X-ray analysis). Specifically, an image showing the distribution of magnesium is acquired through SEM-EDX. An average particle size R of the magnesium particulate portions can be calculated from the obtained image. Specifically, N particulate portions are randomly selected from the particulate portions in the image, and an area Sn of each particulate portion is determined from the image.

Then, a particle diameter (equivalent circle diameter) $Rn = 2 \times (Sn/\pi)^{0.5}$ of each particulate portion is determined from the area Sn of the particulate portion. Here, n satisfies n = 1 to N. The average particle size R can be determined by R = (R1 + ... + Rn)/N. Note that the obtained image is subjected to binarization processing as needed. The number N of selected particulate portions is 5 or more.

At least some of the plurality of particulate portions may be connected by the above high magnesium portions. For example, at least some of the plurality of particulate portions may be connected by linear high magnesium portions.

The magnesium content in the lithium alloy layer may be 0.1% by mass or more and 30% by mass or less. By setting the magnesium content to 0.1% by mass or more, a significant effect can be obtained by adding magnesium. If the content exceeds 30% by mass, the lithium alloy layer will be hardened, and the adhesion to the current collector will decrease. By setting the content to 30% by mass or less, the adhesion between the lithium alloy layer and the current collector can be increased, and a negative electrode can be easily manufactured. Furthermore, by setting the content to 30% by mass or less, it is possible to suppress deterioration in the battery performance caused by an excessive amount of magnesium. The content may be 0.1% by mass or more, 0.5% by mass or more, or 1.0% by mass or more. The content may be 30% by mass or less, 20% by mass or less, 10% by mass or less, or 5.0% by mass or less.

An average thickness Ta of the lithium alloy layer may be 5 $\mu$m or more and 100 $\mu$m or less. By setting the average thickness Ta to 5 $\mu$m or more, it is possible to reduce the volume obtained when the lithium secondary battery is constructed, and to improve the volumetric energy density of the lithium secondary battery. By setting the average thickness Ta to 100 $\mu$m or less, lithium ions consumed during charge/discharge cycles can be compensated for, and a cycle retention rate can be improved. The average thickness Ta may be 5 $\mu$m or more, 10 $\mu$m or more, 20 $\mu$m or more, or 50 $\mu$m or more. The average thickness Ta may be 100 $\mu$m or less, 80 $\mu$m or less, 60 $\mu$m or less, or 40 $\mu$m or less. Note that the average thickness Ta of the lithium alloy layer gradually decreases by repeating charge/discharge cycles. The average thickness Ta may be the average thickness of the lithium alloy layer in the lithium secondary battery (B), which has undergone 20 or fewer charge/discharge cycles after the battery is manufactured.

The average thickness Ta of the lithium alloy layer can be determined using the following procedure. First, the negative electrode is taken out from the lithium secondary battery. A cross section of the negative electrode taken out is analyzed through SEM-EDX (scanning electron microscope-energy dispersive X-ray analysis). Specifically, through SEM-EDX, an image showing a distribution of lithium and magnesium is obtained and a portion of the lithium alloy layer is identified. Then, any five positions of the lithium alloy layer are selected, and the thickness thereof at each position is measured. The average thickness Ta can be determined by arithmetically averaging the thickness measured at the five positions.

Constituent elements of the lithium secondary battery (B) are not particularly limited, except for the use of the above-mentioned negative electrode. Constituent elements used in known lithium secondary batteries may be used as constituent elements other than the negative electrode. Examples of constituent elements of the lithium secondary battery (B) will be described below. However, constituent elements of the lithium secondary battery (B) are not limited to examples described below.

(Negative Electrode)

As described above, the negative electrode includes a negative electrode current collector and a lithium alloy layer formed on the negative electrode current collector. Furthermore, at the negative electrode during charging, magnesium diffuses into the deposited lithium, and a metal layer containing lithium and magnesium is formed on the lithium alloy layer. Lithium in the metal layer dissolves in a nonaqueous electrolyte during discharging. The lithium alloy layer is formed on one surface or both surfaces of the negative electrode current collector. The lithium alloy layer is formed at least on a surface that faces a positive electrode mixture layer with the separator interposed therebetween. When both surfaces of the negative electrode face the positive electrode mixture layer with the separator interposed therebetween, the lithium alloy layers are formed on both surfaces of the negative electrode current collector.

A magnitude relationship between the ratio $R_{AM}/R_{AL}$ of the number of moles $R_{AM}$ of magnesium to the number of moles $R_{AL}$ of lithium in the lithium alloy layer and the ratio $R_{MM}/R_{ML}$ of the number of moles $R_{MM}$ of magnesium to the number of moles $R_{ML}$ of lithium in the metal layer when the SOC is 80% or more can be determined using the following procedure.

First, in a step 1, the negative electrode is taken out from the lithium secondary battery in a SOC of 80% or more. A lithium salt adhering to the surface of the negative electrode is removed by immersing, in a solvent used in the electrolyte solution, the negative electrode taken out. Then, the negative electrode is cut to have a predetermined area S1, and the negative electrode is taken out from the solvent and dried, and a mass M10 of the dried negative electrode is measured. Thereafter, the dried negative electrode is immersed in pure water to completely dissolve the metal layer and the lithium alloy layer included in the negative electrode, thereby obtaining an aqueous solution. The concentrations of lithium ions and magnesium ions in the aqueous solution are measured using Inductively Coupled Plasma Atomic Emission Spectroscopy (ICP-AES). In addition, the remaining portion of the negative electrode from which the metal layer and the lithium alloy layer have been removed (specifically, the negative electrode current collector) is taken out from the aqueous solution and dried. Then, a mass M11 of the dried product obtained is measured. A mass M12 of the lithium alloy layer and the metal layer can be calculated by subtracting the mass M11 from the mass M10. Also, a lithium content Li1 and a magnesium content Mg1 in the lithium alloy layer and in the metal layer are calculated from the concentrations of lithium ions and magnesium ions in the aqueous solution. A mass MLi1 of lithium in the lithium alloy layer and the metal layer can be calculated by multiplying the mass M12 by Li1. A mass MMg1 of magnesium in the lithium alloy layer and the metal layer can be calculated by multiplying the mass M12 by Mg1.

In a step 2, first, a portion of the negative electrode near the portion cut out in the step 1 is cut out to have a larger area than S1, and a lead is attached. Then, the negative electrode provided with the lead is stacked on lithium metal provided with a lead (or a copper foil or the like) with a separator interposed therebetween, to form a stacked body. Then, the stacked body and the electrolyte solution are enclosed in an exterior body to produce a cell. This cell is discharged until the negative electrode is fully discharged. Specifically, the cell is discharged by the same electrical quantity as the electrical quantity by which the battery is charged in the step 1. This discharging causes the metal layer in the negative electrode to dissolve. Then, the negative electrode whose metal layer has been dissolved is taken out from the cell. A lithium salt adhering to the surface of the negative electrode is removed by immersing, in a solvent, the negative electrode taken out. The negative electrode obtained in this manner is cut out to have the same area S1 as in the step 1. The negative electrode cut out is dried, and a mass M20 of the dried negative electrode is measured. Thereafter, the dried negative electrode is immersed in pure water to completely dissolve the lithium alloy layer contained in the negative electrode, thereby obtaining an aqueous solution. Then, the concentrations of lithium ions and magnesium ions in the aqueous solution are measured through ICP-AES. In addition, the remaining portion of the negative electrode from which the lithium alloy layer has been removed (specifically, the negative electrode current collector) is taken out from the aqueous solution and dried. Then, a mass M21 of the dried product obtained is measured. A mass M22 of the lithium alloy layer is calculated by subtracting the mass M20 from the mass M21. Also, a lithium content Li2 and a magnesium content Mg2 in the lithium alloy layer are calculated from the concentrations of lithium ions and magnesium ions in the aqueous solution. A mass MLi2 of lithium in the lithium alloy layer can be calculated by multiplying the mass M22 by Li2. A mass MLi3 of lithium in the metal layer can be calculated by subtracting the MLi2 determined in the step 2 from the MLi1 determined in the step 1.

In a step 3, a portion of the negative electrode near the portion cut out in the step 1 is cut out, and a cross section of a portion where the metal layer is deposited is analyzed through SEM-EDX (scanning electron microscope-energy dispersive X-ray analysis). Specifically, first, an image showing a distribution of magnesium is obtained through SEM-EDX. From the obtained image, regions of the lithium alloy layer and the metal layer are determined. Then, from the area of the portions showing magnesium in each region, a magnesium ratio Mg31 in the lithium alloy layer and a magnesium ratio Mg32 in the metal layer are determined. A mass MMg31 of magnesium in the lithium alloy layer can be calculated by Mg31×MMg1 using MMg1 obtained in the step 1. Also, a mass MMg32 of magnesium in the metal layer can be calculated by Mg32×MMg1. When the atomic weight of lithium is RLi and the atomic weight of magnesium is RMg, the number of moles $R_{AL}$ of lithium in the lithium alloy layer can be calculated by $R_{AL}$ = MLi2/RLi, the number of moles $R_{AM}$ of magnesium in the lithium alloy layer can be calculated by $R_{AM}$ = MMg31/RMg, the number of moles $R_{ML}$ of lithium in the metal layer can be calculated by $R_{ML}$ = MLi3/RLi, and the number of moles $R_{MM}$ of magnesium in the metal layer can be calculated by $R_{MM}$ = MMg32/RMg. A magnitude relationship between the ratio $R_{AM}/R_{AL}$ and the ratio $R_{MM}/R_{ML}$ can be determined through the above steps 1 to 3.

The lithium alloy layer may contain a third element other than lithium (first element) and magnesium (second element). Examples of the third element include aluminum, indium, calcium, lead, hydrogen, sodium, bismuth, copper, and zinc. The lithium alloy may contain one type of third element, or may contain two or more types of third elements. The content of the third element in the lithium alloy layer is lower than the magnesium content, and may be 10% by mass or less, 1% by mass or less, or less than 0.1% by mass. The content of the third element in the lithium alloy layer can be determined based on the magnesium content. The third element contained in the lithium alloy layer can diffuse into the metal layer in a step (iii) described below. The metal layer that is deposited during charging in the charge/discharge cycles after the step (iii) may contain the third element.

In a battery, such as a lithium secondary battery, in which lithium metal is deposited on the negative electrode when the battery is charged, the open circuit potential (OCV: Open Circuit Voltage) of the negative electrode in a fully-charged state may be 70 mV or less with respect to lithium metal (lithium dissolution/deposition potential), for example. The OCV of the negative electrode fully charged may be measured by, under an argon atmosphere, disassembling a fully charged battery, removing the negative electrode, and assembling a cell with lithium metal as a counter electrode. The nonaqueous electrolyte of the cell may have the same composition as the nonaqueous electrolyte in the disassembled battery.

(Negative Electrode Current Collector)

A conductive sheet is used for the negative electrode current collector. A foil, a film, or the like is used as a conductive sheet. Examples of a material of the negative electrode current collector include metallic materials (metals consisting of single elements, and alloys). The negative electrode current collector is preferably made of a material that does not react with lithium. Examples of the metallic materials include copper (Cu), nickel (Ni), iron (Fe), and alloys containing these metallic elements. Examples of the alloys include copper alloys and stainless steel (SUS). In particular, copper and copper alloys are preferable in terms of high conductivity. Examples of elements other than copper contained in copper alloys include magnesium, aluminum, and zinc. The thickness of the negative electrode current collector may be in a range of 5 $\mu$m to 300 $\mu$m (e.g., in a range of 50 $\mu$m to 200 $\mu$m).

(Nonaqueous Electrolyte)

A nonaqueous electrolyte (nonaqueous electrolyte solution) contains a solvent (nonaqueous solvent) and a solute dissolved in the solvent. Examples of solutes include lithium salts. Various additives may be added to an electrolyte solution.

A known material can be used as a solvent. As the solvent, for example, a cyclic carbonic acid ester, a chain carbonic acid ester, a cyclic carboxylic acid ester, a chain carboxylic acid ester, a chain ether, a fluorinated chain ether, a cyclic ether, a fluorinated cyclic ether, or the like can be used. Examples of the cyclic carbonic acid ester include propylene carbonate (PC), ethylene carbonate (EC), fluoroethylene carbonate (FEC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include nonaqueous solvents such as methyl acetate, ethyl acetate, propyl acetate, methyl propionate (MP), and ethyl propionate (EP). Examples of the chain ether include dimethyl ether, ethyl methyl ether, diethyl ether, ethyl propyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,1-dimethoxymethane, and 1,1-diethoxyethane. The chain ether preferably includes at least a chain ether having two or more ether bonds. Examples of such a chain ether include 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, triethylene glycol ethyl methyl ether, tetraethylene glycol dimethyl ether, tetraethylene glycol diethyl ether, and tetraethylene glycol ethyl methyl ether. Examples of the cyclic ether include 1,3-dioxolane, 4-methy-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether. The fluorinated chain ether has a structure in which one or more hydrogen atoms of the above chain ether are substituted by fluorine atoms, and examples thereof include bis(2,2,2-trifluoroethyl)ether, 1, 1,2,2-tetrafluoroethyl 2,2,2-trifluoroethyl ether, and 1,1,2,2-tetrafluoroethyl 2,2,3,3-tetrafluoropropyl ether. The fluorinated cyclic ether has a structure in which one or more hydrogen atoms of the above cyclic ether are substituted by fluorine atoms, and an example thereof is 3,3,4,4-tetrafluorotetrahydrofuran. The nonaqueous solvents may be used alone or in combination of two or more.

Examples of lithium salts include lithium salts of chlorine-containing acids (such as $LiClO_4$, $LiAlCl_4$, and $LiB_{10}Cl_{10}$), lithium salts of fluorine-containing acids (such as $LiPF_6$, $LiPF_2O_2$, $LiBF_4$, $LiSbF_6$, $LiAsF_6$, $LiCF_3SO_3$, and $LiCF_3CO_2$), lithium salts of fluorine-containing acid imides (such as $LiN(FSO_2)_2$, $LiN(CF_3SO_2)_2$, $LiN(CF_3SO_2)(FSO_2)$, $LiN(CF_3SO_2)(C_4F_9SO_2)$, and $LiN(C_2F_5SO_2)_2$), lithium halides (such as LiCl, LiBr, and LiI), and lithium salts containing oxalate complexes (such as $LiB(C_2O_4)_2$, $LiBF_2(C_2O_4)$, $LiPF_4(C_2O_4)$, and $LiPF_2(C_2O_4)_2$). These lithium salts may be used alone or in combination of two or more.

The concentration of a lithium salt in the electrolyte solution may be 1 mol/L or more and 5 mol/L or less, or 1 mol/L or more and 3 mol/L or less. An electrolyte solution having high ionic conductivity and appropriate viscosity can be obtained by setting the lithium salt concentration within the above range.

The electrolyte solution may contain an additive (e.g., a known additive). Examples of additives include 1,3-propanesultone, methyl benzene sulfonate, cyclohexylbenzene, biphenyl, diphenyl ether, and fluorobenzene.

(Positive Electrode)

The positive electrode includes, for example, a positive electrode current collector and a positive electrode mixture layer formed on a surface of the positive electrode current collector. The positive electrode current collector may be in the form of a sheet (e.g., a foil or a film) or may be porous. The positive electrode mixture layer may be formed on both main surfaces of the positive electrode current collector, or may be formed on only one main surface. The positive electrode mixture layer may be formed in a state in which a mesh-like positive electrode current collector is filled with the positive electrode mixture layer.

Examples of a material of the positive electrode current collector include metallic materials such as Al, Al alloys, Ti, Ti alloys, and Fe alloys. An Fe alloy may be stainless steel.

The positive electrode mixture layer contains a positive electrode active material. The positive electrode mixture layer may contain, in addition to the positive electrode active material, at least one type selected from the group consisting of a binding material, a conductive material, a thickener, and an additive. A conductive carbonaceous material may be disposed between the positive electrode current collector and the positive electrode mixture layer, as needed.

A material that electrochemically absorbs and releases lithium ions is used as a positive electrode active material. It is possible to use, as such a material, for example, at least one selected from the group consisting of lithium-containing transition metal oxides, transition metal fluorides, polyanions, fluorinated polyanions, and transition metal sulfides. From the viewpoint of a high average discharge voltage and cost advantage, the positive electrode active material may be a lithium-containing transition metal oxide.

Examples of transition metal elements contained in the lithium-containing transition metal oxide include Sc, Ti, V, Cr, Mn, Fe, Co, Ni, Cu, Y, Zr, and W. The lithium-containing transition metal oxide may contain only one type of transition metal element, or may contain two or more types of transition metal elements. The transition metal element may be at least one selected from the group consisting of Co, Ni, and Mn. The lithium-containing transition metal oxide can contain one, or two or more typical metal elements as needed. Examples of the typical metal elements include Mg, Al, Ca, Zn, Ga, Ge, Sn, Sb, Pb, and Bi. The typical metal element may be Al or the like.

Examples of the binding material include fluoropolymers, polyacrylonitrile, polyimide resins, acrylic resins, polyolefin resins, and rubber polymers. Examples of fluoropolymers include polytetrafluoroethylene and polyvinylidene fluoride.

It is possible to use, as a conductive material, a conductive carbonaceous material or the like. Examples of conductive carbonaceous materials include carbon black, carbon nanotubes, and graphite. Examples of the carbon black include acetylene black and Ketj enblack.

It is possible to use, as a thickener, a cellulose derivative such as cellulose ether, for example. Examples of cellulose derivatives include carboxymethyl cellulose (CMC) and modified products thereof, and methyl cellulose. Examples of modified products of CMC also include salts of CMC. Examples of salts include alkali metal salts (e.g., sodium salts) and ammonium salts.

It is possible to use, as a carbonaceous material disposed between the positive electrode current collector and the positive electrode mixture layer, for example, at least one type selected from conductive carbonaceous materials mentioned as examples of the conductive material.

The positive electrode can be obtained, for example, by applying a slurry containing constituent components of the positive electrode mixture layer and a dispersion medium to the positive electrode current collector or filling the positive electrode current collector with the slurry, and drying and compressing the resulting coating film. A conductive carbonaceous material may be applied to a surface of the positive electrode current collector as needed. It is possible to use, as a dispersion medium, at least one selected from the group consisting of water and organic media (such as N-methyl-2-pyrrolidone).

(Separator)

A porous sheet having ion permeability and insulating properties is used for the separator. Examples of the form of the porous sheet include a microporous film, a woven fabric, and a nonwoven fabric. A material of the separator may be a polymer material. Examples of the polymer materials include olefin resins, polyamide resins, and cellulose. Examples of the olefin resins include polyethylene, polypropylene, and copolymers of ethylene and propylene. The separator may contain an additive as needed. Examples of the additive include inorganic fillers.

The separator may include a plurality of layers that differ from each other in at least either one of forms and compositions. Such a separator may be, for example, a stacked body of a microporous polyethylene film and a microporous polypropylene film, or a stacked body of a nonwoven fabric containing cellulose fibers and a nonwoven fabric containing thermoplastic resin fibers.

(Shapes etc.)

The positive electrode, the negative electrode, and the separator constitute an electrode group. Examples of the electrode group include an electrode group (rolled-up type electrode group) obtained by rolling up the positive electrode and the negative electrode with the separator interposed between the positive electrode and the negative electrode. The electrode group may be in a form other than a rolled-up type. For example, the electrode group may be an electrode group (stacked type electrode group) obtained by stacking the positive electrode and the negative electrode on each other with the separator interposed between the positive electrode and the negative electrode. The form of the lithium secondary battery is not limited, and may be a cylinder, rectangle, coin, button, laminate, or the like. The lithium secondary battery (B) includes an exterior body corresponding to these forms. The exterior body accommodates the electrode group and a nonaqueous electrolyte. There is no particular limitation on the exterior body, and an exterior body similar to an exterior body of a known lithium secondary battery may also be used.

(One Example of Method for Manufacturing Lithium Secondary Battery (B))

A manufacturing method (M) will be described below as an example of a method for manufacturing the lithium secondary battery (B). However, the lithium secondary battery (B) may be manufactured using a manufacturing method other than the manufacturing method (M) described below. The items described regarding the lithium secondary battery (B) can also be applied to the manufacturing method (M) below, and therefore, redundant descriptions thereof may be omitted. Items described regarding the manufacturing method (M) may also be applied to the lithium secondary battery (B).

The manufacturing method (M) is a manufacturing method in which a negative electrode substrate including a negative electrode current collector and a lithium alloy layer containing magnesium and formed on the negative electrode current collector is used. The manufacturing method (M) includes: a step (i) of assembling a battery including the negative electrode substrate; a step (ii) of causing a lithium metal layer to be deposited on the lithium alloy layer by charging the battery; and a step (iii) of causing magnesium present in the lithium metal layer to diffuse into the lithium alloy layer by maintaining the battery at a predetermined temperature for a predetermined period of time.

The negative electrode substrate can be obtained by forming the lithium alloy layer containing magnesium on a surface of the negative electrode current collector. For example, the negative electrode substrate may be formed by pressure-bonding a lithium alloy foil containing magnesium to a surface of the negative electrode current collector. The lithium alloy layer may have the above-described magnesium content and the above thickness.

(Step (i)) (Step of Assembling Battery)

In the step (i), the battery is assembled in accordance with the form of the lithium secondary battery (B). There is no limitation on the method for assembling the battery, and the battery can be assembled using a method similar to a known method for assembling a lithium secondary battery. When the lithium secondary battery (B) includes a rolled-up type electrode group, the rolled-up type electrode group is produced by first rolling up the positive electrode, the negative electrode, and the separator such that the separator is disposed between the positive electrode and the negative electrode. Then, the electrode group and a nonaqueous electrolyte are accommodated in an exterior body. The battery is assembled in this manner. Commercially available products may be used as constituent elements other than the negative electrode, or constituent elements other than the negative electrode may be produced using known methods.

(Step (ii)) (Step of Causing Deposition of Lithium Metal Layer)

In the step (ii), the lithium secondary battery (B) is charged. Upon charging the battery, lithium in the positive electrode active material is deposited on the lithium alloy layer of the negative electrode substrate, forming a lithium metal layer. To form the lithium metal layer, the positive electrode mixture layer contains an amount of positive electrode active material necessary to form the lithium metal layer. In the step (ii), the battery is charged until the SOC reaches 80% or more (a range from 80% to 100%). The step (ii) may be carried out at room temperature (e.g., at a temperature in a range from 10°C to 30°C).

(Step (iii)) (Step of Causing Diffusion of Magnesium)

In the step (iii), for example, the battery is maintained at a temperature of 40°C or higher. A maintained temperature T is preferably 45°C or higher, or may be 50°C or higher. The maintained temperature T may be 60°C or lower, or may be 55°C or lower. A time period D for which the battery is maintained at the above temperature T varies depending on the temperature, and may be 1 day or longer (24 hours or longer), 5 days or longer, 7 days or longer, or 14 days or longer. The time period D may be 21 days or shorter, 7 days or shorter, or 5 days or shorter. The higher the temperature T is, the shorter the time period D can be. In an example of the step (iii), the battery is maintained at a temperature of 40°C or higher for 4 days or longer.

The step (iii) may be performed in a battery open state or in a state in which the battery is temporarily or constantly charged. For example, the step (iii) may also be performed in a state in which the battery is charged with a small amount of current. Diffusion of magnesium can be promoted by charging the battery in the step (iii). The current value used during charging varies depending on the length of a time period Dc for which the battery is charged, and may be 0.005C or more, or 0.01C or more, or 0.2C or less, or 0.1C or less. The time period Dc for which the battery is charged may be 0.1 times or more, 0.3 times or more, 0.5 times or more, 0.7 times or more, or 0.9 times or more, or 1 time or less, 0.9 times or less, 0.7 times or less, 0.5 times or less, or 0.3 times or less, the time period D for which the battery is maintained at the temperature T. Here, 1C (A) is a current value determined by 1C (A) = rated capacity (Ah)/1 (h). In one example, the battery is constantly charged with a current in a range of 0.01C to 0.05C while the step (iii) is performed.

The negative electrode after the step (iii) is performed includes the negative electrode current collector, the lithium alloy layer disposed on the negative electrode current collector, and a metal layer formed on the lithium alloy layer. The metal layer is formed due to magnesium present in the lithium alloy layer diffusing into the lithium metal layer. When the step (iii) is performed under the above-described conditions, at least part of diffused magnesium may form the above-described particulate portions in the metal layer.

The lithium secondary battery (B) can be obtained in the above manner. When the battery is discharged after the above steps, the lithium metal in the metal layer dissolves. That is, lithium ions are eluted into an electrolyte. When charging is performed after discharging, at the negative electrode, a metal layer containing lithium and magnesium is formed on the lithium alloy layer.

Hereinafter, an example of the lithium secondary battery (B) will be specifically described with reference to the drawings. However, the lithium secondary battery (B) is not limited to having a configuration shown in the drawings. The examples described below can be modified based on the above descriptions. Also, items described below may be applied to the above embodiments.

(Embodiment 1)

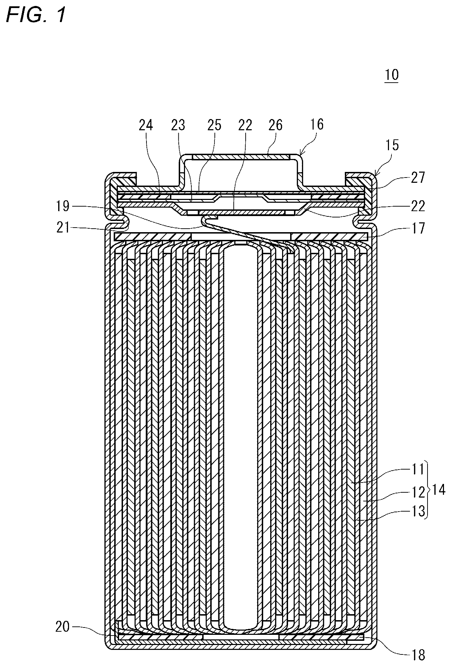

FIG. 1 is a longitudinal cross-sectional view schematically showing a lithium secondary battery 10 according to Embodiment 1. The lithium secondary battery 10 is a cylindrical battery. The lithium secondary battery 10 includes a cylindrical battery case, and a rolled-up type electrode group 14 and a nonaqueous electrolyte (not shown) that are accommodated in the battery case. The battery case includes a cylindrical case body 15 having a bottom, and a sealing body 16 that seals an opening of the case body 15. The case body 15 is made of metal. A gasket 27 is disposed between the case body 15 and the sealing body 16. The gasket 27 ensures the airtightness of the battery case. The case body 15, the sealing body 16, and the gasket 27 constitute an exterior body. In the case body 15, insulating plates 17 and 18 are disposed on both end portions in a rolling-up axial direction of the electrode group 14.

The case body 15 has a step portion 21. The sealing body 16 is supported by the step portion 21. The sealing body 16 includes a filter 22, a lower valve 23, an insulating member 24, an upper valve 25, and a cap 26. The above-described components that constitute the sealing body 16 are electrically connected to each other, except for the insulating member 24. The cap 26 functions as a positive electrode terminal. The case body 15 functions as a negative electrode terminal.

The electrode group 14 is a rolled-up type electrode group constituted by a positive electrode 11, a negative electrode 12, and separators 13. The positive electrode 11, the negative electrode 12, and the separators 13 are all band-shaped. The negative electrode 12 is the above-described negative electrode.

The positive electrode 11 is electrically connected to the cap 26 via a positive electrode lead 19. One end of the positive electrode lead 19 is connected to the positive electrode 11. The other end of the positive electrode lead 19 is connected to the sealing body 16 (filter 22). The negative electrode 12 is electrically connected to the case body 15 via a negative electrode lead 20. One end of the negative electrode lead 20 is connected to the negative electrode 12. The other end of the negative electrode lead 20 is connected to the case body 15.

(Appendix)

The above description discloses the following techniques.

(Technique 1)

A lithium secondary battery including:

a positive electrode;
a negative electrode;
a separator disposed between the positive electrode and the negative electrode; and
a nonaqueous electrolyte,
wherein the negative electrode includes a current collector and a lithium alloy layer formed on the current collector,
the lithium alloy layer contains magnesium,
the negative electrode is a negative electrode in which a metal layer containing lithium and magnesium is formed on the lithium alloy layer through deposition of lithium metal during charging, and the lithium metal dissolves during discharging, and
when the state of charge is 80% or more, a ratio $R_{AM}/R_{AL}$ of the number of moles $R_{AM}$ of magnesium to the number of moles $R_{AL}$ of lithium in the lithium alloy layer is greater than a ratio $R_{MM}/R_{ML}$ of the number of moles $R_{MM}$ of magnesium to the number of moles $R_{ML}$ of lithium in the metal layer.

(Technique 2)

The lithium secondary battery according to Technique 1,

wherein the metal layer contains high magnesium portions having a higher proportion of magnesium than another portion of the metal layer, and
at least some of the high magnesium portions are aggregated into particles to form a plurality of particulate portions.

(Technique 3)

The lithium secondary battery according to Technique 2,
wherein the plurality of particulate portions have an average particle size of 5 $\mu$m or less.

(Technique 4)

The lithium secondary battery according to Technique 2 or 3,
wherein at least some of the plurality of particulate portions are connected by the high magnesium portions.

(Technique 5)

The lithium secondary battery according to any one of Techniques 1 to 4,
wherein a magnesium content in the lithium alloy layer is 0.1% by mass or more and 30% by mass or less.

(Technique 6)

The lithium secondary battery according to any one of Techniques 1 to 5,
wherein the lithium alloy layer has an average thickness of 5 $\mu$m or more and 100 $\mu$m or less.

Examples

Hereinafter, the present disclosure will be described in more detail using examples. In these examples, a plurality of lithium secondary batteries were produced and evaluated using the following procedures.

(Production of Battery A1)

(1) Production of Positive Electrode

A positive electrode active material, acetylene black (conductive material), and polyvinylidene fluoride (binding material) were mixed in a mass ratio of 95 : 2.5 : 2.5 to obtain a mixture. A positive electrode slurry was prepared by adding an appropriate amount of N-methyl-2-pyrrolidone (dispersion medium) to the mixture and stirring the resulting mixture. A lithium-containing transition metal oxide containing Ni, Co, and Al was used as the positive electrode active material.
A stacked body was formed by applying the positive electrode slurry to both surfaces of an aluminum foil (positive electrode current collector) and drying the positive electrode slurry. The stacked body was compressed in the thickness direction using a roller. The compressed stacked body was cut to a predetermined size. A positive electrode including the positive electrode current collector and positive electrode mixture layers formed on both surfaces of the positive electrode current collector was produced in this manner.

(2) Production of Negative Electrode Substrate

A negative electrode substrate was produced by, in an inert gas atmosphere, pressure-bonding a lithium magnesium alloy foil (with a thickness of 35 $\mu$m) to a surface of a copper foil (negative electrode current collector, with a thickness of 14 $\mu$m). The magnesium content in the lithium magnesium alloy foil was 5% by mass.

(3) Preparation of Nonaqueous Electrolyte

A liquid nonaqueous electrolyte was prepared by dissolving $LiPF_6$ and $LiBF_2(C_2O_4)$ in a nonaqueous solvent. The concentrations of $LiPF_6$ and $LiBF_2(C_2O_4)$ in the nonaqueous electrolyte were respectively 1 mol/L and 0.1 mol/L. A mixture of propylene carbonate (PC) and 1,2-dimethoxyethane (DME) in a volume ratio of 1 : 2 was used as the nonaqueous solvent.

(4) Assembly of Battery

One end of an aluminum positive electrode lead was attached to the positive electrode current collector through welding. One end of a nickel negative electrode lead was attached to the negative electrode current collector through welding. A stacked-type electrode group was produced by stacking the positive electrode and the negative electrode with a separator interposed between the positive electrode and the negative electrode, in an inert gas atmosphere. A microporous polyethylene film was used as the separator.
Next, the electrode group was accommodated in an exterior body. A bag-shaped exterior body formed of a laminate having an Al layer was used as the exterior body. The nonaqueous electrolyte was injected into the exterior body, and the exterior body was then sealed. A lithium secondary battery was assembled in this manner. Note that, when the electrode group was accommodated in the exterior body, the other end of the positive electrode lead and the other end of the negative electrode lead were exposed to the outside of the exterior body.

(5) Step (ii)

Next, the above-described step (ii) was performed on the assembled battery. Specifically, the battery was charged at a current of 0.2C until the SOC reached 80%. A lithium metal layer was deposited on the lithium alloy layer through this step.

(6) Step (iii)

Next, the above-described step (iii) was performed. Specifically, the battery was kept in an environment at 40°C for 120 hours (5 days). This caused magnesium in the lithium magnesium alloy layer to diffuse into the lithium metal layer. A battery A1 (lithium secondary battery (B)) was produced in this manner.

(Battery A2)

A battery A2 (lithium secondary battery (B)) was produced under the same conditions and using the same method as those for the production of the battery A1, except that the step (iii) was performed while the battery was charged. In the step (iii), the battery was kept in an environment at 40°C for 120 hours (5 days) in the same manner as for the production of the battery A1. However, the step (iii) was performed while the battery was continuously charged at a current of 0.01C.

(Battery C1)

A battery C1 was produced under the same conditions and using the same method as those for the production of the battery A1, except that the step (iii) was not performed. The battery C1 is a comparative example.

(7) Evaluation

A charge/discharge cycle test was conducted on the produced lithium secondary batteries. Specifically, each of the lithium secondary batteries was charged in a thermostatic bath at 25°C under the following charging conditions, charging was stopped for 20 minutes (resting), and the battery was discharged under the following discharging conditions. A 50-charge/discharge cycle test was performed by repeating one cycle including the above charging, resting, and discharging 50 times. At this time, a film thickness meter was attached to the battery, and the expansion and contraction of the negative electrode were observed.

(Charge)

The battery was charged at a constant current of 0.2C until the battery voltage reached 4.1 V, and then charged at a constant voltage of 4.1 V until the charging current reached 0.02C.

(Discharge)

The battery was discharged at a constant current of 0.2C until the battery voltage reached 3.0 V.
The above cycle test was used to evaluate how the maximum thickness of the negative electrode and a capacity retention rate changed. The maximum thickness of the negative electrode was determined from measurement values of the film thickness meter. The capacity retention rate was determined using the following equation by measuring a battery capacity E0 before the cycle test and a battery capacity E1 during the cycle test.

$$\text{The capacity retention rate (\%)} = 100 \times E1/E0$$

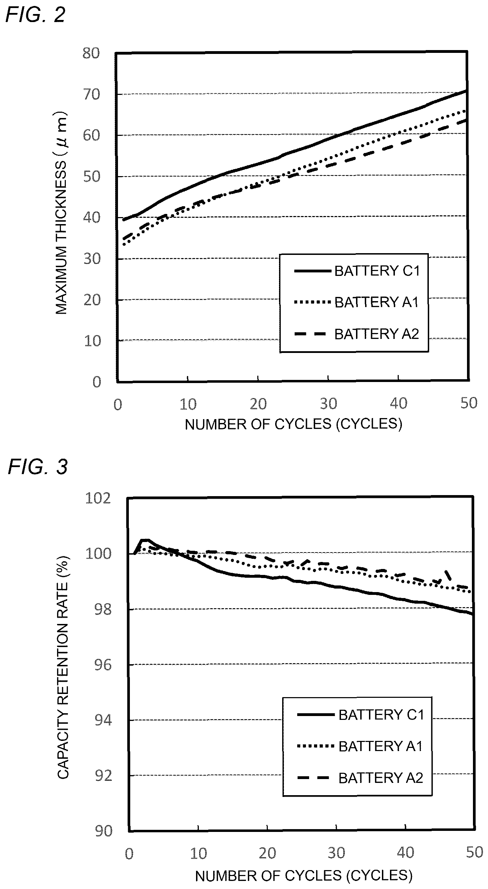

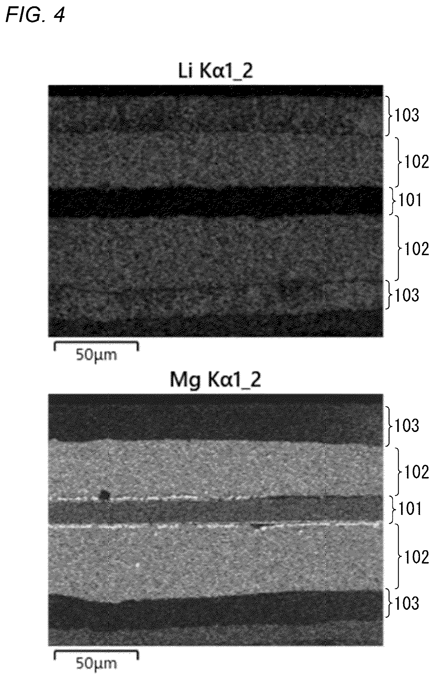

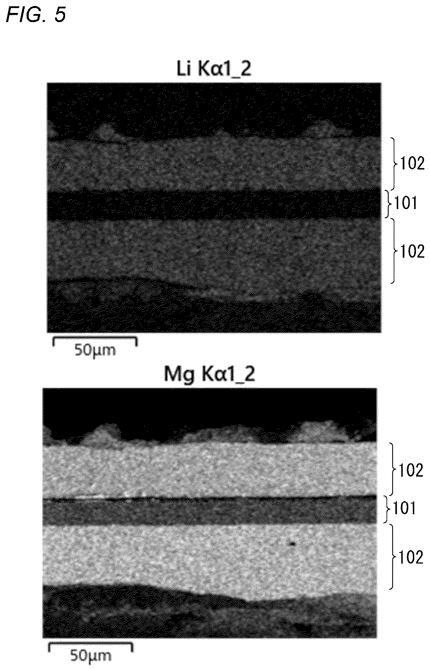

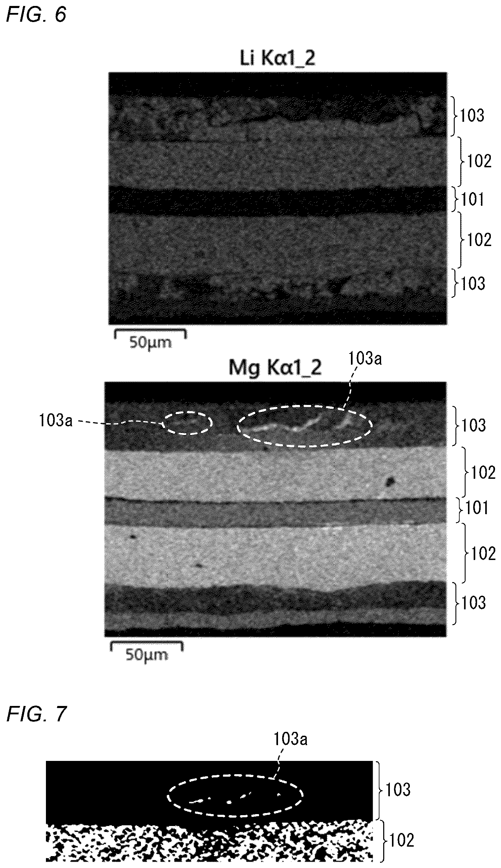

FIG. 2 shows a relationship between the number of cycles in the cycle test and the maximum thickness of the negative electrode. FIG. 3 shows a relationship between the number of cycles in the cycle test and the capacity retention rate.
As shown in FIGS. 2 and 3, the batteries A1 and A2 according to the present disclosure exhibited suppressed expansion of the negative electrode and had favorable cycle characteristics, compared to the battery C1 of the comparative example. Comparison between the batteries A1 and A2 revealed that the expansion of the negative electrode of the battery A2 was more suppressed and the battery A2 exhibited better cycle characteristics.
The negative electrode of the rolled-up type lithium secondary battery (B) according to the present disclosure was analyzed through SEM-EDX (scanning electron microscope-energy dispersive X-ray spectroscopy). FIG. 4 shows images obtained by observing the negative electrode obtained after the step (iii) was performed through SEM-EDX. The step (iii) was performed by holding the battery charged in the step (ii), in an environment at 45°C for 168 hours (7 days) in an open state (conditions for the step (iii) for the battery having the negative electrode shown in FIGS. 5 and 6 were the same). The upper image in FIG. 4 shows a lithium dispersion state, and the lower image in FIG. 4 shows a magnesium dispersion state (the same applies to FIGS. 5 and 6). In FIG. 4, the upper and lower images are images obtained at the same position (the same applies to FIGS. 5 and 6).
As shown in FIG. 4, a lithium alloy layer 102 was disposed on a current collector 101 of the negative electrode, and a metal layer 103 was formed on the lithium alloy layer 102. The lithium alloy layer 102 is a lithium magnesium alloy layer containing magnesium. The metal layer 103 is a layer in which magnesium had diffused into a lithium metal layer deposited during charging.
The battery subjected to the above step (iii) was discharged at 25°C. FIG. 5 shows images obtained by observing the discharged battery through SEM-EDX. As shown in FIG. 5, most of the metal layer 103 was dissolved.
The battery subjected to the above step (iii) was discharged at 25°C and then charged at 25°C until the SOC reached 80%. FIG. 6 shows images obtained by observing the charged battery through SEM-EDX. As shown in FIG. 6, a metal layer 103 containing lithium and magnesium was formed on the lithium alloy layer 102. At that time, the ratio $R_{AM}/R_{AL}$ of the number of moles $R_{AM}$ of magnesium to the number of moles $R_{AL}$ of lithium in the lithium alloy layer 102 was greater than the ratio $R_{MM}/R_{ML}$ of the number of moles $R_{MM}$ of magnesium to the number of moles $R_{ML}$ of lithium in the metal layer 103. Note that, since the ratio $R_{AM}/R_{AL}$ and the ratio $R_{MM}/R_{ML}$ were almost constant throughout the entire negative electrode, by comparing the ratio $R_{AM}/R_{AL}$ and the ratio $R_{MM}/R_{ML}$ for a portion of the negative electrode, it is possible to estimate which of the ratio $R_{AM}/R_{AL}$ and the ratio $R_{MM}/R_{ML}$ is larger throughout the entire negative electrode.

The metal layer 103 had high magnesium portions 103a in which the proportion of magnesium was higher than that in other portions of the metal layer 103. At least some of the high magnesium portions 103a were aggregated into particles to form a plurality of particulate portions. The plurality of particulate portions had an average particle size of 5 μm or less. A plurality of particulate portions were connected by linear high magnesium portions 103a.

FIG. 7 shows an image obtained by binarizing a portion of the image shown in FIG. 6. Binarization of the image clarified the particulate portions of the high magnesium portion 103a surrounded by the right circle in FIG. 6.

[Industrial Applicability]

The present disclosure can be used for a lithium secondary battery.

Although currently preferred embodiments of the present invention are described, the disclosure should not be construed as limiting the present invention. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

[Reference Signs List]

10: lithium secondary battery, 11: positive electrode, 12: negative electrode, 13: separator, 14: electrode group, 15: case body, 16: sealing body, 27: gasket, 101: current collector, 102: lithium alloy layer, 103: metal layer, 103a: high magnesium portion

**Claims**

1. A lithium secondary battery comprising:

   a positive electrode;
   a negative electrode;
   a separator disposed between the positive electrode and the negative electrode;
   and
   a nonaqueous electrolyte,
   wherein the negative electrode includes a current collector and a lithium alloy layer formed on the current collector,
   the lithium alloy layer contains magnesium,
   the negative electrode is a negative electrode in which a metal layer containing lithium and magnesium is formed on the lithium alloy layer through deposition of lithium metal during charging, and the lithium metal dissolves during discharging, and
   when the state of charge is 80% or more, a ratio $R_{AM}/R_{AL}$ of the number of moles $R_{AM}$ of magnesium to the number of moles $R_{AL}$ of lithium in the lithium alloy layer is greater than a ratio $R_{MM}/R_{ML}$ of the number of moles $R_{MM}$ of magnesium to the number of moles $R_{ML}$ of lithium in the metal layer.

2. The lithium secondary battery according to claim 1,

   wherein the metal layer contains high magnesium portions having a higher proportion of magnesium than another portion of the metal layer, and
   at least some of the high magnesium portions are aggregated into particles to form a plurality of particulate portions.

3. The lithium secondary battery according to claim 2,
   wherein the plurality of particulate portions have an average particle size of 5 μm or less.

4. The lithium secondary battery according to claim 2 or 3,
   wherein at least some of the plurality of particulate portions are connected by the high magnesium portions.

5. The lithium secondary battery according to claim 1 or 2,
   wherein a magnesium content in the lithium alloy layer is 0.1% by mass or more and 30% by mass or less.

6. The lithium secondary battery according to claim 1 or 2,
   wherein the lithium alloy layer has an average thickness of 5 $\mu$m or more and 100 $\mu$m or less.

FIG. 1

*FIG. 2*

*FIG. 3*

FIG. 4

*FIG. 5*

Li Kα1_2

50μm

Mg Kα1_2

50μm

FIG. 6

FIG. 7

# EP 4 629 321 A1

## INTERNATIONAL SEARCH REPORT

| International application No. |
|---|
| **PCT/JP2023/040420** |

### A. CLASSIFICATION OF SUBJECT MATTER

*H01M 4/134*(2010.01)i; *H01M 4/40*(2006.01)i; *H01M 10/052*(2010.01)i
FI:    H01M4/134; H01M4/40; H01M10/052

According to International Patent Classification (IPC) or to both national classification and IPC

### B. FIELDS SEARCHED

Minimum documentation searched (classification system followed by classification symbols)

    H01M4/134; H01M4/40; H01M10/052

Documentation searched other than minimum documentation to the extent that such documents are included in the fields searched

    Published examined utility model applications of Japan 1922-1996
    Published unexamined utility model applications of Japan 1971-2024
    Registered utility model specifications of Japan 1996-2024
    Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/138490 A1 (PANASONIC IP MAN CO LTD) 30 June 2022 (2022-06-30) | 1, 5-6 |
|   | claim 1, paragraphs [0088]-[0095] | |
| A |  | 2-4 |
| A | JP 2020-184513 A (TOYOTA MOTOR CORP) 12 November 2020 (2020-11-12) | 1-6 |
| A | JP 5-50815 B2 (HYDRO QUEBEC) 30 July 1993 (1993-07-30) | 1-6 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

20

**INTERNATIONAL SEARCH REPORT**
Information on patent family members

International application No.

**PCT/JP2023/040420**

| Patent document cited in search report | | | Publication date (day/month/year) | Patent family member(s) | | | Publication date (day/month/year) |
|---|---|---|---|---|---|---|---|
| WO | 2022/138490 | A1 | 30 June 2022 | (Family: none) | | | |
| JP | 2020-184513 | A | 12 November 2020 | US | 2020/0343583 | A1 | |
| | | | | CN | 111864182 | A | |
| JP | 5-50815 | B2 | 30 July 1993 | US | 4652506 | A | |
| | | | | EP | 159937 | A2 | |
| | | | | KR | 10-1985-0007320 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022138490 A

- JP H05050815 A